# EUROPÄISCHE PATENTSCHRIFT

(11) **EP 2 941 579 B1**
(45) Veröffentlichungstag und Bekanntmachung des Hinweises auf die Patenterteilung: **22.03.2017**
(21) Anmeldenummer: 15701698.1
(22) Anmeldetag: 13.01.2015
(51) Int. Cl.: F16K 31/56, F16K 3/08, F16K 31/00

(54) **VENTILOBERTEIL**
VALVE TOP
PARTIE SUPÉRIEURE DE SOUPAPE

(30) Priorität: 11.03.2014 DE 202014101096 U
(43) Veröffentlichungstag der Anmeldung: 11.11.2015
(73) Patentinhaber: Flühs Drehtechnik GmbH, D-58515 Lüdenscheid (DE)
(72) Erfinder: THURAU, Friedrich, 58849 Herscheid (DE)
(74) Vertreter: Patentanwälte Dörner & Kötter PartG mbB
(86) Internationale Anmeldenummer: PCT/EP2015/050511
(87) Internationale Veröffentlichungsnummer: WO 2015/135666

(56) Entgegenhaltungen:
- EP-A1- 0 424 782
- DE-C2- 3 207 895
- FR-A- 1 141 475
- US-A- 3 780 758

## Beschreibung

Die Erfindung betrifft ein Ventiloberteil mit einem Kopfstück, das von einer Spindel mittig durchsetzt ist, die in dem Kopfstück um Ihre Längsachse drehbar gelagert ist und über die eine Steuerscheibe relativ zu einer an dieser anliegenden Einlassscheibe rotierbar ist.

Mit Hilfe von Ventiloberteilen wird der Austritt von Medien aus Armaturen gesteuert. Zu diesem Zweck wird das Ventiloberteil mittels seines Kopfstücks in das Gehäuse einer Armatur geschraubt. Auf seine Spindel wird ein Drehgriff oder Hebel gesteckt. Bei bekannten Ventiloberteilen (vgl. DE 32 07 895 C2) sind jeweils zwei Scheiben zur Steuerung des Durchflusses vorgesehen. Die Scheiben sind aus keramischem Material hergestellt. Eine der beiden Scheiben - Steuerscheibe - ist mit Hilfe eines mit der Spindel in Verbindung stehender Mitnehmers drehbar in dem Ventiloberteil angeordnet. Die andere Scheibe - Einlassscheibe - ist eine feste Ventilsitzscheibe, auch als Festscheibe bezeichnet. Bei Drehung der Steuerscheibe gleiten die Scheiben aneinander. Auf der dem Ventilsitz der Armatur zugewandten Seite ist eine Dichtung angeordnet, die an der Einlassscheibe anliegt. Die Dichtung überragt die Stirnfläche des Ventiloberteils. Sie dient zur Abdichtung sowohl zur Einlassscheibe als auch zum Ventil der Armatur.

Ventiloberteile werden häufig auch als Mehrwegventil ausgeführt. Hierbei wird jeweils nur einer von mehreren, insbesondere von zwei Zuläufen durch den Ventilkörper freigegeben, sodass wahlweise beispielsweise "nur Kaltwasser" oder "nur Warmwasser" entnommen werden kann. Darüber hinaus ist eine definierte Position "ganz geschlossen" vorgesehen. Zur Reduzierung der abgegebenen Wassermenge, insbesondere auch im Falle der Abgabe von heißem Wasser ist es wünschenswert, dass der Ventilkörper nach dessen Bedienung selbsttätig in die Position "ganz geschlossen" zurückbewegt wird.

Hier setzt die vorliegende Erfindung an. Der Erfindung liegt die Aufgabe zugrunde, ein Ventiloberteil bereitzustellen, das nach Betätigung des Ventilkörpers zur Entnahme eines Fluids aus wenigstens einem Zulauf selbsttätig in die Position "ganz geschlossen" verfährt. Gemäß der Erfindung wird diese Aufgabe durch ein Ventiloberteil mit den Merkmalen des kennzeichnenden Teils des Patentanspruchs 1 gelöst.

Mit der Erfindung ist ein Ventiloberteil geschaffen, dass nach Betätigung des Ventilkörpers zur Entnahme eines Fluids aus zumindest einem Zulauf selbsttätig in die Position "ganz geschlossen" verfährt. Durch das Zusammenspiel von Steuerhülse und Führungshülse ist eine selbsttätige Rückbewegung der Steuerscheibe in die geschlossene Ventilstellung (Ausgangsposition) erzielt. Die Anordnung von zwei auf der Spindel angeordneten Hülsen ist ein einfacher Austausch einzelner Funktionen ermöglicht. Dabei kann einerseits eine Hülse im Falle eines Defekts einfach ausgetauscht werden. Darüber hinaus ist auch die Implementierung einer anderen Funktion durch Verwendung andersartiger Steuer- und Führungshülsen ermöglicht. Bevorzugt ist die Führungshülse in dem Kopfstück drehfest gehalten.

In Ausgestaltung der Erfindung weist die Steuerhülse eine unrunde, insbesondere mehrkantförmige oder auch polygonförmige axiale Durchführung auf, durch die ein an der Spindel angeordneter unrunder, insbesondere mehrkantförmiger oder auch polygoner Abschnitt hindurch tritt. Dabei ist die Steuerhülse bevorzugt über ein Federelement, vorzugsweise eine Schraubenfeder, gegen die Führungshülse vorgespannt. Hierdurch ist ein kontinuierlicher Kontakt zwischen Steuerhülse und Steuerkontur des Kopfstücks erzielt. Beispielsweise kann das Federelement auch in Form eines Elastomerelementes ausgebildet sein.

In weiterer Ausgestaltung der Erfindung weist die Steuerhülse eine radial umlaufende Anschlagfläche auf, an dem das Federelement anliegt. Hierdurch ist eine abhängig von dem Kopfstück ausgestaltete Aufnahme für das Federelement erzielt.

In weiterer Ausgestaltung der Erfindung ist das Kopfteil an seinem der Einlassscheibe abgewandten Ende über einen eine Durchführung für die Spindel aufweisenden Deckel verschlossen, der eine Anschlagfläche zur Anlage des Federelements aufweist. Hierdurch ist eine vereinfachte Montage erzielt.

In weiterer Ausgestaltung der Erfindung ist an dem Deckel ein mit der Durchführung fluchtender hohlzylindrischer Abschnitt angeformt. Hierdurch ist die Führung der Spindel in dem Kopfstück verbessert. Darüber hinaus ist eine vergrößerte Anlagefläche zur Aufnahme des Federelements erzielt.

In Weiterbildung der Erfindung weist die Steuerhülse wenigstens eine schräge Führungskante auf, die an einer Führungsschräge der Steuerkontur anliegt, derart, dass bei Drehung der Steuerhülse in eine definierte Richtung eine axiale Verschiebung der Steuerhülse entgegen der Vorspannung des Federelements erfolgt. Hierdurch ist eine Erhöhung der Rückstellkraft der Feder bei Drehung der Spindel und damit der Steuerhülse erzielt, welche im Anschluss an die Betätigung nach Loslassen der Spindel eine Rückstellung der Position der Steuerhülse und damit der Spindel in die Ausgangsposition "ganz geschlossen" bewirkt. Unter einer "schrägen Führungskante" ist vorliegend eine eine Auflagefläche aufweisende Kante zu verstehen, die in ihrem Verlauf eine Steigung aufweist, wobei die Steigung nicht linear erfolgen muss. Der Begriff "Führungskante" ist im Folgenden mit dem Begriff "Führungsschräge" gleich zu setzen. Die unterschiedlichen Begriffe werden lediglich zur besseren Zuordnung zur Führungshülse bzw. zur Steuerhülse gewählt.

In Weiterbildung der Erfindung weist die Steuerhülse wenigstens zwei in entgegengesetzter Richtung ansteigende schräge Führungskanten auf, die an zwei in entgegengesetzten Richtungen steigende Führungsschrägen der Führungskontur der Führungshülse anliegen, derart, dass bei Rotation der Steuerhülse in eine beliebige Richtung eine axiale Verschiebung der Steuerhülse entgegen der Vorspannung des Federelements bewirkt ist. Hierdurch ist eine selbsttätige Rückstellung des Ventilkörpers in die Position "ganz geschlossen" aus beiden Öffnungspositionen (beispielsweise "nur Kaltwasser" bzw. "nur Warmwasser") bewirkt.

In einer anderen Ausgestaltung der Erfindung weist die Führungskontur der Führungshülse benachbart der wenigstens einen Führungsschräge eine ebene Gleitfläche auf. Hierdurch ist bei Drehung der Spindel in Richtung der Führungsschräge eine anschließende selbsttätige Rückstellung in die Position "ganz geschlossen" erzielt, wobei eine Drehung der Spindel in die entgegengesetzte Richtung, bei der die Steuerhülse entlang der ebenen Gleitfläche der Führungshülse gleitet, ohne selbsttätige Rückstellung erfolgt. Hierdurch ist beispielsweise bei der Entnahme von Heißwasser eine automatische Rückstellung des Ventilkörpers in die Position "ganz geschlossen" und bei der Entnahme von Kaltwasser eine Einstellung einer kontinuierlichen, dauerhaften Abgabemenge ermöglicht. Bevorzugt ist die ebene Gleitfläche an einer Seite durch einen Anschlag begrenzt, der mit einem an der Steuerhülse angeordneten Anschlag zusammenwirkt.

In Weiterbildung der Erfindung mündet die wenigstens eine Führungsschräge der Führungskontur der Führungshülse in eine Einkerbung, in die in Grundstellung der Steuerscheibe eine an ihrem dem Kopfstück zugewandten Ende der schrägen Führungskante angeordnete Nase eingreift. Hierdurch ist eine mechanische Arretierung der Steuerhülse und damit auch der Spindel in der Position "ganz geschlossen" erzielt.

Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschrieben:

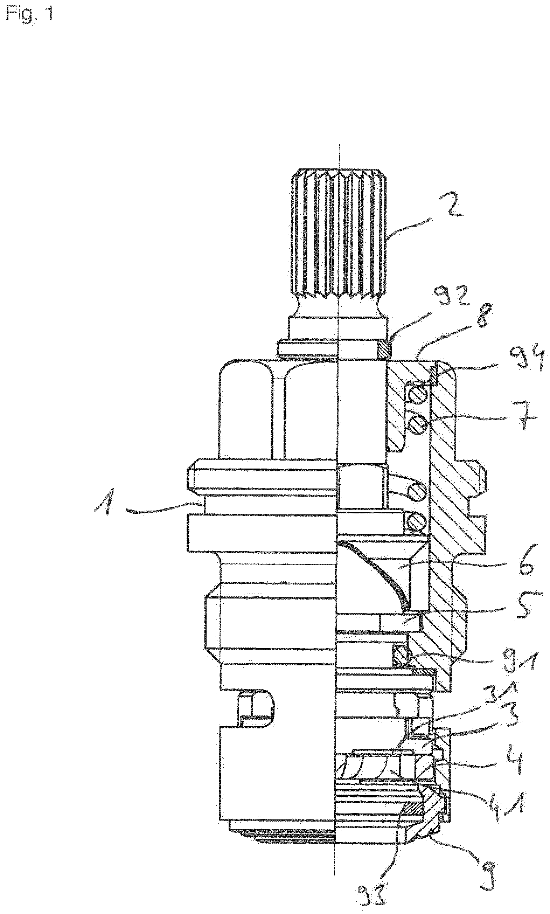

- Figur 1: die schematische Darstellung eines Ventiloberteils in Teilschnitt;

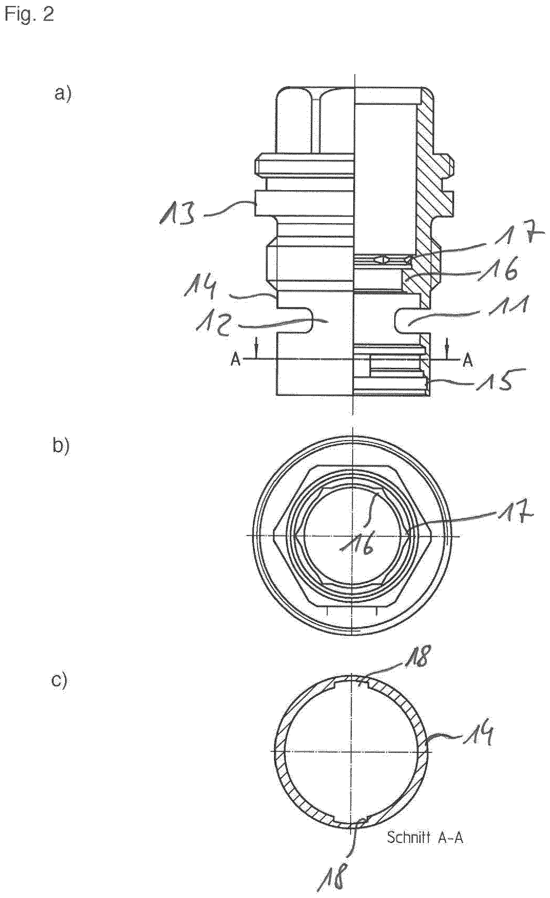

- Figur 2: die Darstellung des Kopfstücks des Ventiloberteils aus Figur 1
a) in Seitenansicht im Teilschnitt;
b) in der Draufsicht;
c) im Querschnitt A-A;

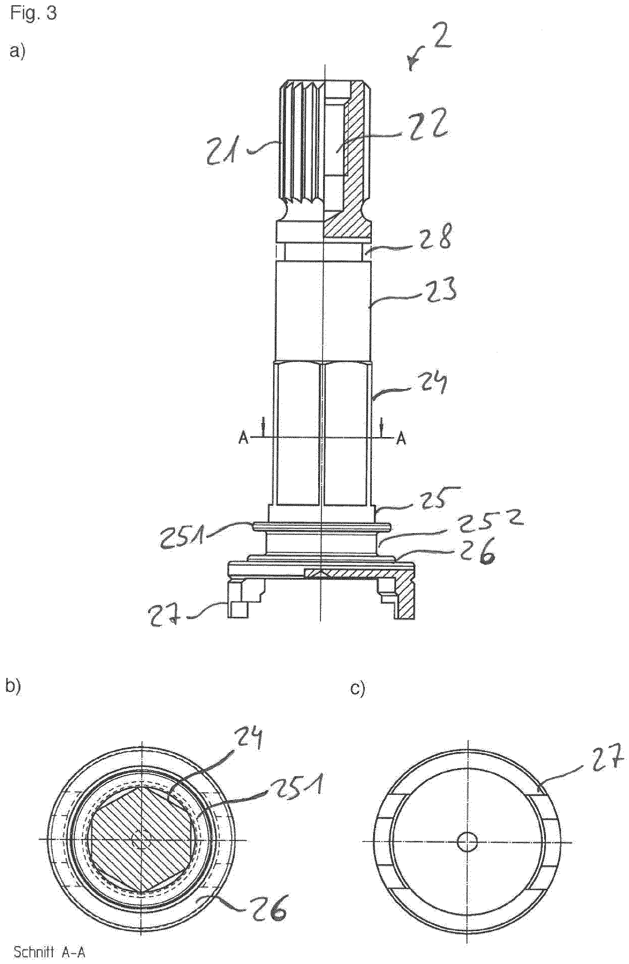

- Figur 3: die Darstellung der Spindel des Ventiloberteils aus Figur 1
a) in Seitenansicht;
b) im Schnitt A-A;
c) in der Ansicht von unten;
- Figur 4: die Darstellung der Steuerhülse des Ventiloberteils aus Figur 1
a) in räumlicher Darstellung
b) in der Draufsicht;
c) in Seitenansicht
d) im Längsschnitt A-A;
- Figur 5: die Darstellung der Führungshülse des Ventiloberteils aus Figur 1
a) in räumlicher Darstellung;
b) in der Draufsicht;
c) in Seitenansicht;
d) im Längsschnitt A-A;

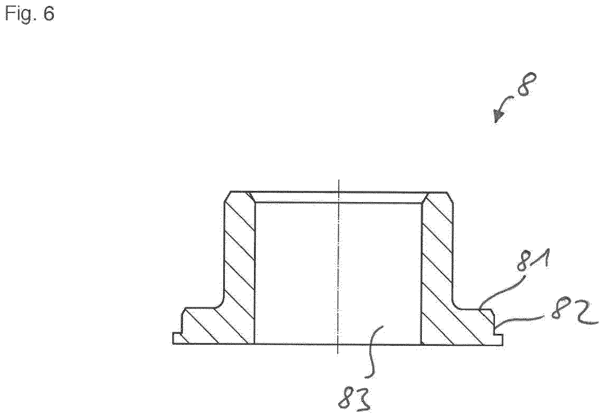

- Figur 6: die Darstellung des Deckels des Ventiloberteils aus Figur 1 im Längsschnitt;
- Figur 7: die schematische Darstellung eines Ventiloberteils in einer weiteren Ausführungsform im Teilschnitt;
- Figur 8: die Darstellung der Steuerhülse des Ventiloberteils auf Figur 7
a) in räumlicher Darstellung;
b) in der Draufsicht;
c) in Seitenansicht;
d) in um 90° gedrehter Seitenansicht;
- Figur 9: die Darstellung der Führungshülse des Ventiloberteils auf Figur 7
a) in räumlicher Darstellung;
b) in der Seitenansicht und
c) in der Draufsicht.

Das als Ausführungsbeispiel gewählte Ventiloberteil weist ein Kopfstück 1 auf, das von einer in ihm radial geführten Spindel 2 mittig durchsetzt ist. Mit der Spindel 2 ist eine Steuerscheibe formschlüssig verbunden und im Kopfstück 1 radial geführt. An dem der Spindel 2 abgewandten Seite der Steuerscheibe 3 ist eine Einlassscheibe in dem Kopfstück 1 vorgesehen, an die sich eine Lippendichtung 9 anschließt, die mit dem Ventilsitz einer - nicht dargestellten - Armatur zur Anlage kommt. Innerhalb des Kopfstücks 1 ist oberhalb der Steuerscheibe 3 eine Führungshülse 5 drehfest angeordnet, an die sich eine Steuerhülse 6 anschließt, die über eine Schraubenfeder 7 gegen die Führungshülse 5 vorgespannt ist.

Das Kopfstück 1 besteht aus einem symmetrischen Hohlkörper, dessen beide Stirnflächen offen sind. Auf seiner der Spindel 2 abgewandten Seite weist das Kopfstück 1 einen hülsenförmigen Teil 14 auf. In dem hülsenförmigen Teil 14 sind Durchtrittsfenster 11 vorgesehen, die von Längsstegen 12 begrenzt sind. Im Ausführungsbeispiel sind zwei durch Längsstege 12 begrenzte Fenster 11 angeordnet. Nach dem Einbringen des Kopfstücks 1 in eine Armatur liegt ein Bund 13 des Kopfstücks 1 auf dem Gehäuse der Armatur auf. In dem hülsenförmigen Teil 14 ist innen endseitig eine Hinterdrehung 15 zur Aufnahme der Lippendichtung 9 eingebracht. Oberhalb des Fensters 11 ist an die Innenwandung des Kopfstücks 1 ein radial nach innen kragender umlaufender Steg 16 angeformt, an den sich eine Nut 17 mit im Wesentlichen sechskantförmiger Kontur anschließt. Die Kontur der Nut 17 ist durch Einbringen von sechs um jeweils um 60 Grad versetzt zueinander angeordnete Ecken in die Innenwandung des Kopfstücks 1 erzielt. An seinem der Lippendichtung 9 gegenüberliegenden Ende ist das Kopfstück 1 über einen Deckel 8 verschlossen.

Die Spindel 2 ist im Wesentlichen massiv ausgeführt. Sie ist an ihrer dem Wasserzulauf abgewandten Stirnseite außen als Außenvielkant 21 ausgeführt und mit einem Sackloch 22 mit Innengewinde zur Befestigung eines Drehgriffs versehen. Anschließend ist außen an der Spindel 2 eine Zylinderfläche 23 vorgesehen, an die sich ein Sechskantabschnitt 24 anschließt. Der Sechskantabschnitt 24 geht in einen zylindrischen Abschnitt 25 über, an dem umlaufend ein nach außen kragender Steg 251 angeformt ist. Der Steg 251 begrenzt mit einer endseitig an die Spindel 2 angeformten Scheibe 26 eine Ringnut 252 zur Aufnahme eines O-Rings 91. Der O-Ring 91 dichtet die Spindel 2 gegen das Kopfstück 1 ab. Zwischen dem Deckel 8 und dem O-Ring 91 ist so innerhalb des Kopfstücks 1 eine Fettkammer gebildet. Endseitig ist die Scheibe 26 mit einer Mitnehmerkontur 27 zur Aufnahme der Steuerscheibe 3 versehen.

Zwischen der Zylinderfläche 23 und dem Außenvielkant 21 ist in die Spindel 2 ein Einstich 28 zur Aufnahme eines Sprengrings 92 eingebracht. Der Sprengring 92 dient der axialen Fixierung der Spindel 2 in dem Kopfstück 1. Dabei ist der Deckel 8 über den Sprengring 92 an dem Kopfstück 1 fixiert.

Die Steuerscheibe 3 ist im Wesentlichen als kreisrunde Scheibe ausgebildet, aus der ein Kreisschnitt 31 ausgenommen ist. Der Kreisschnitt 31 weist im Ausführungsbeispiel einen Winkel von circa 90 Grad auf. Auf ihrer der Spindel 2 zugewandten Seite weist die Steuerscheibe 3 eine Außenkontur auf, die mit der Mitnehmerkontur 27 der Spindel 2 korrespondiert, wodurch Steuerscheibe 3 und Spindel 2 formschlüssig miteinander verbunden sind.

Die Einlassscheibe 4 ist ebenfalls im Wesentlichen als kreisrunde Scheibe ausgebildet. Sie weist auf ihrem Umfang zwei sich gegenüberliegende - nicht dargestellte - Nasen auf, mit denen sie in Ausnehmungen 18 fasst, die hierzu in dem hülsenförmigen Teil 14 des Kopfstücks 1 vorgesehen sind. Die Einlassscheibe 4 ist damit drehfest in dem Kopfstück 1 angeordnet. Die Einlassscheibe 4 weist zwei diametral zueinander angeordnete Durchtrittsöffnungen 41 auf.

Die Lippendichtung 9 ist in die Hinterdrehung 15 des Kopfstücks 1 eingesetzt und über einen eingebrachten Stützring 93 fixiert. Im montierten Zustand liegen die Lippen der Lippendichtung 9 dichtend gegen die Einlassscheibe 4 sowie gegen den - nicht dargestellten - Ventilsitz der Armatur an.

Die Führungshülse 5 besteht im Wesentlichen aus einer Sechskantscheibe 51, die mittig mit einer kreisrunden Durchführung 52 versehen ist. Auf der Sechskantscheibe 51 ist eine hohlzylindrische Anformung 53 angeordnet, die mit einer Führungskontur 54 versehen ist. Die Führungskontur 54 weist gegenüberliegend jeweils zwei in entgegengesetzte Richtungen ansteigende Führungsschrägen 541 auf, die in eine Einkerbung 542 münden.

Die Steuerhülse 6 ist im Wesentlichen hohlzylindrisch ausgebildet. Sie weist eine im Wesentlichen sechskantförmige axiale Durchführung 61 auf, die mit dem Sechskantabschnitt 24 der Spindel 2 korrespondiert. Außen umlaufend weist die Steuerhülse 6 einen Kragen 62 auf. Oberhalb des Kragens 62 ist in die Steuerhülse 6 eine Steuerkontur 63 eingebracht, die jeweils zwei in entgegengesetzte Richtungen ansteigende schräge Führungskanten 64 aufweist, wobei jeweils zwei Führungskanten 64 an ihrem der Führungshülse 5 zugewandten Maximum eine Nase 65 ausbilden, die mit einer Einkerbung 542 der Führungskontur 54 der Führungshülse 5 korrespondieren. Die Führungskanten 64 sind derart ausgebildet, dass sie mit den Führungsschrägen 541 der Führungskontur 54 der Führungshülse 5 derart zusammenwirken, dass die Steuerhülse 6 bei relativer Drehung gegenüber der in dem Kopfstück 1 drehfest angeordneten Führungshülse 5 mit ihren Führungskanten 64 an den Führungsschrägen 541 der Führungskontur 54 entlanggleitet und eine axiale Verschiebung entlang der Spindel 2 vollzieht.

Der Deckel 8 ist im Wesentlichen hohlzylindrisch ausgebildet. An seinem der Spindel 2 zugewandten Ende ist ein umlaufender Kragen 81 angeformt, der der Anlage der Schraubenfeder 7 dient. Außen ist der Kragen 81 umlaufend mit einer Ausnehmung 82 zur Aufnahme eines Gleitrings 94 versehen. Die Durchführung 83 des Deckels 8 dient sowohl der Führung der Spindel 2 als auch der Schraubenfeder 7.

Die Steuerhülse 6 liegt in der Position "ganz geschlossen" mit ihren Führungskanten 64 an den Führungsschrägen 541 der drehfest in dem Kopfstück 1 angeordneten Führungshülse 5 an. Dabei ist die sechskantförmige Durchführung 61 von dem Sechskantabschnitt 24 der Spindel 2 durchdrungen. Die Schraubenfeder 7 liegt auf dem Kragen 62 der Steuerhülse 6 an und ist zwischen Steuerhülse 6 und dem Kragen 81 des Deckels 8, der über den Sprengring 92 an der Spindel 2 axial gehalten ist, vorgespannt. Durch den maximalen Hub der Steuerhülse ist zugleich ein Drehanschlag der Spindel 2 gebildet. Dabei schlägt entweder die Steuerhülse 5 an den Deckel 8 an oder aber die Feder 7 wird auf Blockmaß gefahren, wodurch ebenfalls eine weitere Drehung der Spindel 2 verhindert ist. Durch die Höhe des Deckels 8 beziehungsweise des in das Kopfstück 1 hineinragenden hohlzylindrischen Teils des Deckels 8 ist somit der maximale Drehwinkel der Spindel 2 und somit die Öffnungsstellung des durch die Steuerscheibe 3 und die Einlassscheibe 4 gebildeten Ventilkörpers einstellbar. Gleiches gilt für die Dimensionierung der Feder 7 im Falle der Drehwinkelbegrenzung der Spindel 2 über das Blockmaß. Das Blockmaß ist das Maß des vollständig zusammengepressten Federelements 7.

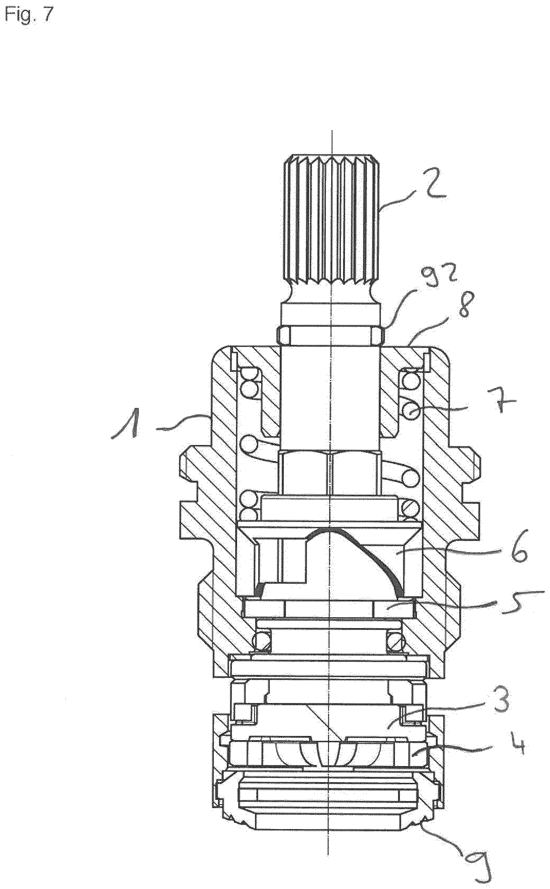

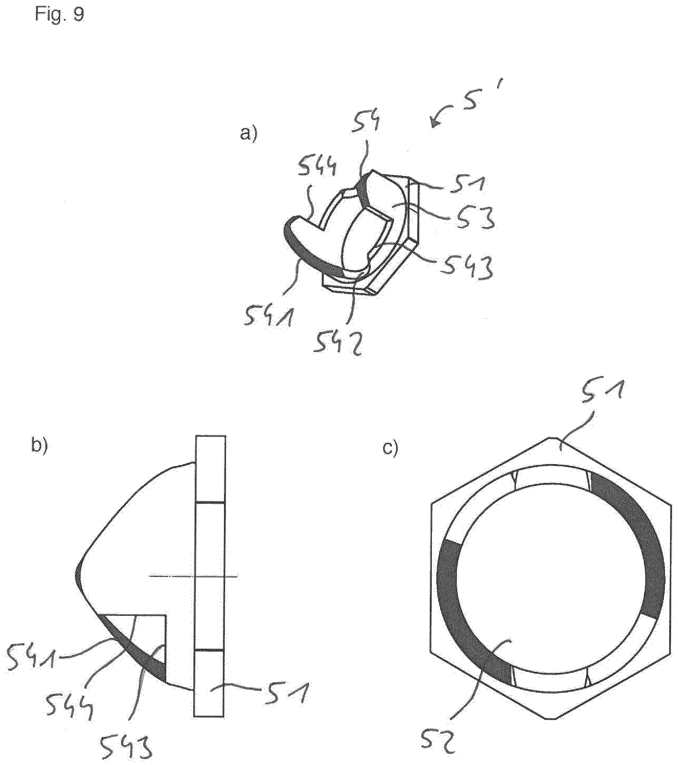

Im Ausführungsbeispiel gemäß Figur 7 ist die Führungskontur 54 der Führungshülse 5 derart ausgebildet, dass sie gegenüberliegend jeweils eine Führungsschräge 541 aufweist, an die sich jeweils eine ebene Gleitfläche 543 anschließt. Zwischen der Führungsschräge 541 und der Gleitfläche 543 ist jeweils eine Einkerbung 542 angeordnet. Die ebenen Gleitflächen 543 sind jeweils durch einen Anschlag 544 begrenzt, der am Ende der jeweils anderen Führungsschräge 541 angeordnet ist (vgl. Figur 9).

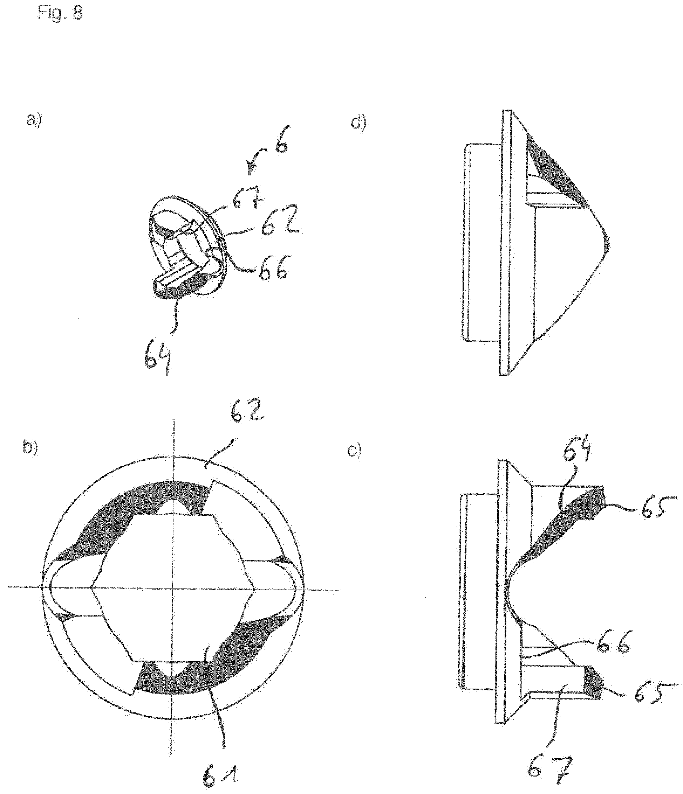

Die Hülse 6 ist weitgehend spiegelgleich zur Führungskontur 54 der Führungshülse 5 ausgebildet. Es ist gegenüberliegend jeweils eine Führungskante 64 angeordnet, an die sich eine zurückversetzte ebene Kante 66 anschließt. Dabei ist an dem jeweiligen der Führungshülse 5 zugewandten Maximum der Führungskanten 64 jeweils eine Nase 65 ausgebildet, die mit einer Einkerbung 542 der Führungskontur 54 der Führungshülse 5 korrespondiert (vgl. Figur 8). An die Nase 65 schließt sich eine Anschlagkante 67 an, die im Wesentlichen orthogonal zur ebenen Kante 66 ausgerichtet ist und die mit dem Anschlag 544 der Führungskontur 54 der Führungshülse 5 korrespondiert.

Das zuvor genannte Ausführungsbeispiel zeigt, dass durch einfaches Wechseln von Führungshülse 5 und Steuerhülse 6 die Funktionsweise des erfindungsgemäßen Ventiloberteils geändert und den jeweiligen Anforderungen angepasst werden kann. Selbstverständlich sind auch weitere als die hier genannten, exemplarisch beschriebenen Ausgestaltungen von Führungshülse 5 und Steuerhülse 6 denkbar. Zudem ist durch den erfindungsgemäßen Aufbau des Ventiloberteils eine kompakte Bauweise erzielt.

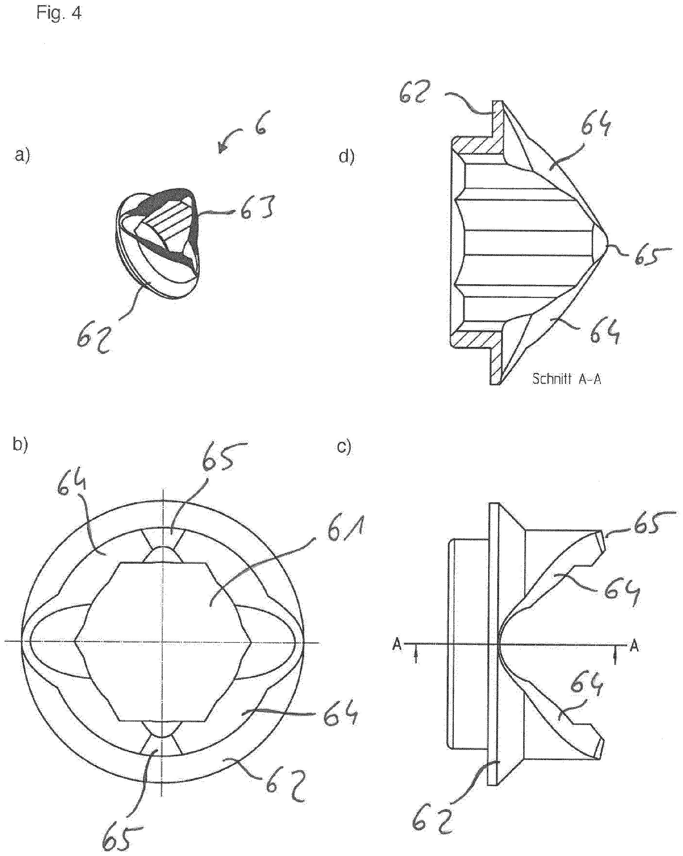

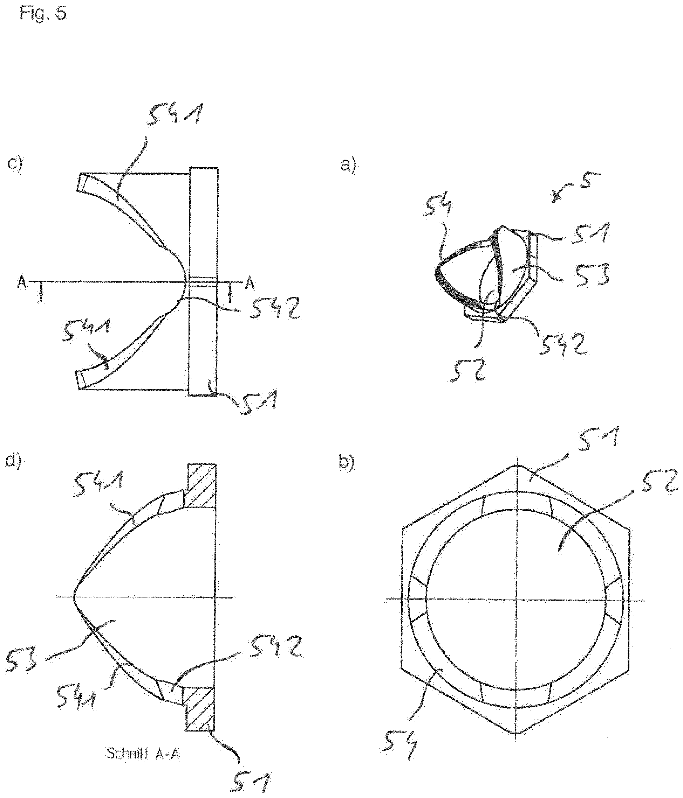

Durch eine bestimmte Kombination der Tiefe des Deckels 8 einerseits und der Gestaltung von Steuerhülse 6 und Führungshülse 5 andererseits ist es darüber hinaus sogar möglich, ein Ventiloberteil zu realisieren, bei dem nur zwei "stabile" Zustände, nämlich "Ventil vollständig geöffnet" und "Ventil vollständig geschlossen", und zwar ohne Zwischenstellungen eingenommen werden können. Hierbei sind Führungshülse 5 und Steuerhülse 6 entsprechend den Figuren 4 und 5 ausgebildet, wobei der maximale Drehwinkel der Spindel 2 so groß eingestellt ist, dass die Nase 65 der Steuerhülse 6 über den höchsten Punkt der Führungskontur 54 der Führungshülse 5 hinweg gleitet, wonach sich der stabile Zustand einstellt.

## Patentansprüche

1. Ventiloberteil mit einem Kopfstück (1), das von einer Spindel (2) mittig durchsetzt ist, die in dem Kopfstück (1) um ihre Längsachse drehbar gelagert ist, und über die eine Steuerscheibe (3) relativ zu einer an dieser anliegenden Einlassscheibe rotierbar ist, **dadurch gekennzeichnet, dass** auf der Spindel (2) innerhalb des Kopfstücks (1) eine eine Steuerkontur (63) aufweisende Steuerhülse (6) und eine eine der Steuerkontur (63) gegenüberliegende Führungskontur (54) aufweisende Führungshülse (5) angeordnet sind, die derart zusammenwirken, dass nach Betätigung der Steuerscheibe (3) über die Spindel (2) in eine definierte Richtung eine selbsttätige Rückbewegung der Steuerscheibe (3) in ihre Ausgangsposition bewirkt ist.

2. Ventiloberteil nach Anspruch 1, **dadurch gekennzeichnet, dass** die Führungshülse (5) in dem Kopfstück (1) drehfest gehalten ist.

3. Ventiloberteil nach Anspruch 2, **dadurch gekennzeichnet, dass** die Steuerhülse (6) eine unrunde, insbesondere mehrkantförmige Durchführung (61) aufweist, durch die ein hiermit korrespondierender unrunder, insbesondere mehrkantförmiger Abschnitt (24) der Spindel (2) hindurchtritt.

4. Ventiloberteil nach Anspruch 2 oder 3, **dadurch gekennzeichnet, dass** die Steuerhülse (6) über ein Federelement, vorzugsweise eine Schraubenfeder (7) gegen die Führungshülse (5) vorgespannt ist.

5. Ventiloberteil nach Anspruch 4, **dadurch gekennzeichnet, dass** die Steuerhülse (6) eine radial umlaufende Anschlagfläche aufweist, an dem das Federelement anliegt.

6. Ventiloberteil nach Anspruch 4 oder 5, **dadurch gekennzeichnet, dass** das Kopfteil (1) an seinem der Einlassscheibe (4) abgewandten Ende über einen eine Durchführung (83) für die Spindel (2) aufweisenden Deckel (8) verschlossen ist, der eine Anschlagfläche zur Anlage des Federelements aufweist.

7. Ventiloberteil nach Anspruch 6, **dadurch gekennzeichnet, dass** der Deckel (8) einen mit der Durchführung (83) fluchtenden hohlzylindrischen Abschnitt aufweist.

8. Ventiloberteil nach einem der Ansprüche 4 bis 7, **dadurch gekennzeichnet, dass** die Steuerhülse (6) wenigstens eine schräge Führungskante (64) aufweist, die an einer Führungsschräge (541) der Führungskontur (54) der Führungshülse (5) anliegt, derart, dass bei Drehung der Steuerhülse (6) in eine definierte Richtung eine axiale Verschiebung der Steuerhülse (6) entgegen der Vorspannung des Federelements erfolgt.

9. Ventiloberteil nach Anspruch 8, **dadurch gekennzeichnet, dass** die Steuerhülse (6) wenigstens zwei in entgegengesetzte Richtungen ansteigende schräge Führungskanten (64) aufweist, die an zwei in entgegengesetze Richtungen ansteigende Führungsschrägen (541) der Führungskontur (54) der Führungshülse (5) anliegen, derart, das bei Drehung der Steuerhülse (6) in eine beliebige Richtung eine axiale Verschiebung der Steuerhülse (6) entgegen der Vorspannung des Federelements bewirkt ist.

10. Ventiloberteil nach Anspruch 8, **dadurch gekennzeichnet, dass** die Führungskontur (54) der Führungshülse (5) benachbart der wenigstens einen Führungsschräge (541) eine ebene Gleitfläche (543) aufweist.

11. Ventiloberteil nach Anspruch 10, **dadurch gekennzeichnet, dass** die ebene Gleitfläche (543) an einer Seite durch einen Anschlag (544) begrenzt ist, der mit einem an der Steuerhülse (6) angeordneten Anschlag (67) zusammenwi rkt.

12. Ventiloberteil nach einem der Ansprüche 4 bis 11, **dadurch gekennzeichnet, dass** die wenigstens eine Führungsschräge (541) der Führungskontur (54) der Führungshülse (5) in eine Einkerbung (542) mündet, in die in Grundstellung der Steuerscheibe (3) eine an ihrem der Führungshülse (5) zugewandten Ende der schrägen Führungskante (64) angeordnete Nase (65) eingreift.

## Claims

1. Valve top with a top piece (1) through the centre of which a spindle (2) passes which is mounted in the top piece (1) to rotate around its longitudinal axis and by means of which a control disk (3) can be turned with reference to an inlet disk placed against it, **characterised in that** a control sleeve (6) with a control contour (63) and a guide sleeve (5) with a guide contour (54) lying opposite the control contour (63) are arranged on the spindle (2) within the top piece (1), which interact in such a way that, when the control disk (3) is activated in a defined direction by the spindle (2), the control disk (3) moves back automatically to its original position.

2. Valve top in accordance with claim 1, **characterised in that** the guide sleeve (5) is held within the top piece (1) to prevent it from turning.

3. Valve top in accordance with claim 2, **characterised in that** the control sleeve (6) has a non-round preferably polygonal opening (61) through which a correspondingly non-round preferably polygonal section (24) of the spindle (2) passes.

4. Valve top in accordance with claim 2 or claim 3, **characterised in that** the control sleeve (6) is pre-tensioned against the guide sleeve (5) by a spring element, preferably a helical spring (7).

5. Valve top in accordance with claim 4, **characterised in that** the control sleeve (6) has a radially circumferential contact surface, on which the spring element lies.

6. Valve top in accordance with claim 4 or claim 5, **characterised in that** the top piece (1) is closed at the end facing away from the inlet disk (4) by a cover (8) which has an opening (83) allowing the spindle (2) to pass through, and a contact surface against which the spring element lies.

7. Valve top in accordance with claim 6, **characterised in that** the cover (8) has a hollow-cylindrical section aligned with the opening (83).

8. Valve top in accordance with any of the claims 4 to 7, **characterised in that** the control sleeve (6) has at least one oblique guiding edge (64) which lies against a guide bevel (541) of the guide contour (54) of the guide sleeve (5) in such a way that when the control sleeve (6) is turned in a defined direction, the control sleeve (6) moves axially against the pre-tension of the spring element.

9. Valve top in accordance with claim 8, **characterised in that** the control sleeve (6) has at least two oblique guiding edges (64) sloping in opposite directions which lie against two guide bevels (541) of the guide contour (54) of the guide sleeve (5) which slope in opposite directions, in such a way that when the control sleeve (6) is turned in any direction, the control sleeve (6) moves axially against the pre-tension of the spring element.

10. Valve top in accordance with claim 8, **characterised in that** the guide contour (54) of the guide sleeve (5) adjacent to the at least one guide bevel (541) has a flat sliding surface (543).

11. Valve top in accordance with claim 10, **characterised in that** the flat sliding surface (543) is delimited on one side by a stop (544) which interacts with a stop (67) arranged on the control sleeve (6).

12. Valve top in accordance with any of the claims 4 to 11, **characterised in that** the at least one guide bevel (541) of the guide contour (54) of the guide sleeve (5) opens into a notch (542), into which a tappet (65) at the end of the oblique guiding edge (64) facing the guide sleeve (5) engages when the control disk (3) is in its starting position.

## Revendications

1. Partie supérieure de soupape avec une pièce têtière (1) traversée en son milieu par une broche (2) en appui rotatif dans la pièce têtière (1) pour pouvoir tourner sur son axe longitudinal, et via laquelle il est possible de faire tourner un disque de commande (3) relativement à un disque d'admission appliquant contre ce dernier, **caractérisée en ce que** sur la broche (2),
à l'intérieur de la pièce têtière (1), sont agencées une douille de commande (6) présentant un contour de commande (63) et une douille de guidage (5) présentant un contour de guidage (54) faisant face au contour de commande (63), qui interagissent de telle sorte qu'après avoir actionné le disque de commande (3) via la broche (2) dans une direction définie, un mouvement automatique de retour du disque de commande (3) jusque sur sa position de départ est provoqué.

2. Partie supérieure de soupape selon la revendication 1, **caractérisée en ce que** la douille de guidage (5) est retenue sans pouvoir tourner dans la pièce têtière (1).

3. Partie supérieure de soupape selon la revendication 2, **caractérisée en ce que** la douille de commande (6) présente un passage (61) en faux-rond, en particulier polygonal, que traverse en l'épousant un segment (24) en faux-rond, en particulier polygonal, de la broche (2).

4. Partie supérieure de soupape selon la revendication 2 ou 3, **caractérisée en ce que** la douille de commande (6) est précontrainte contre la douille de guidage (5) via un élément ressort (7), de préférence un ressort hélicoïdal.

5. Partie supérieure de soupape selon la revendication 4, **caractérisée en ce que** la douille de commande (6) présente une surface butée périphérique radiale contre laquelle applique l'élément ressort.

6. Partie supérieure de soupape selon la revendication 4 ou 5, **caractérisée en ce que** la partie têtière (1) est obturée, à l'extrémité ne regardant pas le disque d'admission (4), via un couvercle (8) présentant un passage (83) pour la broche (2), couvercle qui présente une surface butée contre laquelle applique l'élément ressort.

7. Partie supérieure de soupape selon la revendication 6, **caractérisée en ce que** le couvercle (8) présente un segment cylindrique creux dans l'alignement du passage (83).

8. Partie supérieure de soupape selon l'une des revendications 4 à 7, **caractérisée en ce que** la douille de commande (6) présente au moins une arête de guidage (64) oblique qui applique contre un chanfrein de guidage (541) du contour de guidage (54) de la douille de guidage (5), de sorte que, lors de la rotation de la douille de commande (6) dans une direction définie, un déplacement axial de la douille de commande (6) a lieu en sens opposé à la précontrainte exercée par l'élément ressort.

9. Partie supérieure de soupape selon la revendication 8, **caractérisée en ce que** la douille de commande (6) présente au moins deux arêtes de guidage (64) obliques montant dans des directions opposées, arêtes qui appliquent contre deux chanfreins de guidage (541) - lesquels montent dans des directions opposées - du contour de guidage (54) de la douille de guidage (5), de sorte que lorsque la douille de commande (6) tourne dans une direction quelconque, cela provoque un déplacement axial de la douille de commande (6) en direction opposée à celle de la précontrainte exercée par l'élément ressort.

10. Partie supérieure de soupape selon la revendication 8, **caractérisée en ce que** le contour de guidage (54) de la douille de guidage (5) présente une surface de glissement (543) plane au voisinage d'au moins un chanfrein de guidage (541).

11. Partie supérieure de soupape selon la revendication 10, **caractérisée en ce que** la surface de glissement (543) plane est limitée d'un côté par une butée (544) qui interagit avec une butée (67) agencée contre la douille de commande (6).

12. Partie supérieure de soupape selon les revendications 4 à 11, **caractérisée en ce qu'**au moins un chanfrein de guidage (541) du contour de guidage (54) de la douille de guidage (5) aboutit dans une entaille (542) dans laquelle engrène, lorsque le disque de commande (3) se trouve en position de base, une saillie (65) agencée à son extrémité - regardant la douille de guidage (5) - de l'arête de guidage (64) oblique.
